# EUROPÄISCHE PATENTSCHRIFT

(11) **EP 1 800 929 B1**
(45) Veröffentlichungstag und Bekanntmachung des Hinweises auf die Patenterteilung: **28.08.2013**
(21) Anmeldenummer: 06024765.7
(22) Anmeldetag: 30.11.2006
(51) Int. Cl.: B60K 6/387, B60K 6/40, B60K 6/48, B60K 6/26

(54) **Doppelkupplungsanordnung**
Double coupling system
Agencement de couplage double

(30) Priorität: 21.12.2005 DE 102005063248
(43) Veröffentlichungstag der Anmeldung: 27.06.2007
(73) Patentinhaber: GETRAG Getriebe- und Zahnradfabrik Hermann Hagenmeyer GmbH & Cie KG, 74199 Untergruppenbach (DE)
(72) Erfinder: Blessing, Uli Christian, 74078 Heilbronn (DE); Deigner, Thomas, 74629 Pfedelbach (DE); Fronius, Kuno, 74348 Lauffen (DE); Gremplini, Hansi, 71691 Freiberg (DE); Ruehle, Guenter, 74369 Loechgau (DE); Schweiher, Mark, 74348 Lauffen (DE); Wolf, Walter, Dr., 71672 Marbach a.N. (DE)
(74) Vertreter: Steil, Christian

(56) Entgegenhaltungen:
- WO-A1-2005/065976
- DE-A1- 10 133 695
- FR-A1- 2 799 251
- FR-A1- 2 814 121
- FR-A1- 2 850 906

## Beschreibung

Die vorliegende Erfindung betrifft eine Doppelkupplungsanordnung gemäß dem Oberbegriff des Anspruchs 1, mit einer Eingangswelle, mit einer ersten Reibkupplung, deren Eingangsglied mit der Eingangswelle und deren Ausgangsglied mit einer ersten Ausgangswelle verbunden ist, mit einer zweiten Reibkupplung, deren Eingangsglied mit der Eingangswelle und deren Ausgangsglied mit einer zweiten Ausgangswelle verbunden ist, wobei die Ausgangswellen mit entsprechenden Eingangswellen eines Doppelkupplungsgetriebes verbindbar sind, und mit einer elektrischen Maschine, die mit der ersten Ausgangswelle verbunden ist.

Eine Doppelkupplungsanordnung ist bekannt aus dem Dokument DE 10 2004 062 530 A1.

Doppelkupplungsanordnungen für Doppelkupplungsgetriebe sind allgemein bekannt. Bei einem Doppelkupplungsgetriebe sind die Gangstufen auf zwei parallele Teilgetriebe verteilt, und zwar derart, dass einem Teilgetriebe die ungeraden Gangstufen und dem anderen Teilgetriebe die geraden Gangstufen zugeordnet sind. Jedem Teilgetriebe ist ferner eingangsseitig eine eigene Reibkupplung zugeordnet. Die zwei Reibkupplungen bilden eine Doppelkupplungsanordnung, die zwischen einem Antriebsmotor (gewöhnlich einem Verbrennungsmotor) und dem Doppelkupplungsgetriebe angeordnet ist.

Wenn in einem Teilgetriebe eine Gangstufe eingelegt ist und die zugeordnete Reibkupplung geschlossen ist, kann in dem anderen Teilgetriebe eine benachbarte Gangstufe bereits eingelegt werden. Mit Auslegen und Öffnen der Reibkupplung der Quellgangstufe wird in überschneidender Art und Weise die Reibkupplung der Zielgangstufe geschlossen, so dass ein Gangwechsel ohne Zugkraftunterbrechung erfolgen kann.

Das Grundprinzip solcher Doppelkupplungsgetriebe ist seit langem bekannt. In jüngster Zeit hat diese Technologie wieder eine größere Bedeutung erlangt.

Bei dem Doppelkupplungsgetriebe, das aus der eingangs genannten DE 10 2004 062 530 A1 bekannt geworden ist, ist an das Doppelkupplungsgetriebe ferner eine elektrische Maschine angebunden. Die elektrische Maschine ist, genauer gesagt, über einen Radsatz mit der ersten Ausgangswelle verbunden. Die elektrische Maschine ist parallel zu der koaxialen Anordnung der Reibkupplungen gelagert.

Aus der EP 1 541 401 A1 ist eine Kupplungsanordnung bekannt, die für einen Hybrid-Antriebsstrang verwendbar ist. Das Getriebe des Antriebsstanges ist ein herkömmliches Getriebe mit einer Mehrzahl von Gangstufen, dem gewöhnlich eine einzelne Anfahr- und Trennkupplung zugeordnet ist, die zwischen Antriebsmotor und Getriebe angeordnet wird.

Bei der dort beschriebenen Kupplungsanordnung sind zwei Reibkupplungen nicht parallel sondern seriell miteinander verbunden, und zwar über eine elektrische Maschine. Mit anderen Worten ist das Ausgangsglied der einen Reibkupplung mit der elektrischen Maschine verbunden. Ferner ist die elektrische Maschine mit dem Eingangsglied der anderen Reibkupplung verbunden.

Aus der EP 1 195 537 B1 ist schließlich eine herkömmliche Doppelkupplungsanordnung bekannt.

Eine Doppelkupplungsanordnung gemäß dem Oberbegriff des Anspruchs 1 ist aus dem Dokument FR 2 850 906 A bekannt. Ferner offenbart das Dokument FR 2 814 121 A1 eine weitere Ausführungsform einer Doppelkupplungsanordnung, bei der die Reibkupplungen radial ineinander verschachtelt werden.

Vor dem obigen Hintergrund ist es die Aufgabe der vorliegenden Erfindung, eine verbesserte Doppelkupplungsanordnung anzugeben.

Diese Aufgabe wird durch eine Doppelkupplungsanordnung gemäß Anspruch 1 gelöst, wobei die elektrische Maschine koaxial zu der ersten Reibkupplung angeordnet ist.

Durch die koaxiale Anordnung der elektrischen Maschine ist es möglich, die elektrische Maschine optimal in die Doppelkupplungsanordnung zu integrieren. Das Gehäuse des eigentlichen Doppelkupplungsgetriebes kann vereinfacht werden. Ferner ist eine modulare Ausgestaltung der Doppelkupplungsanordnung vergleichsweise einfach realisierbar, derart, dass sowohl Doppelkupplungsanordnungen mit als auch ohne elektrische Maschine für unterschiedliche Produktvarianten realisierbar sind.

Generell ist anzumerken, dass die erste Reibkupplung sowohl dem Teilgetriebe mit den ungeraden Gangstufen als auch dem Teilgetriebe mit den geraden Gangstufen zugeordnet sein kann. Die Unterscheidung zwischen erster und zweiter Reibkupplung erfolgt vorliegend lediglich zur besseren Darstellbarkeit der Erfindung.

Erfindungsgemäß ist ein Rotor der elektrischen Maschine fest mit dem Ausgangsglied der ersten Reibkupplung verbunden.

Bei dieser Ausführungsform ist eine vollwertige Doppelkupplungsanordnung mit direkter Anbindung an eine Getriebeeingangswelle ohne zwischengeschaltete Drehmomentübertragungseinrichtung möglich.

Von besonderem Vorteil ist es, wenn der Rotor und das Ausgangsglied der ersten Reibkupplung einstückig ausgebildet sind.

Bei dieser Ausführungsform lässt sich die Doppelkupplungsanordnung mit wenigen Bauteilen realisieren.

Gemäß einer weiteren bevorzugten Ausführungsform ist der Rotor radial außen an dem Ausgangsglied der ersten Reibkupplung festgelegt.

Bei dieser Ausführungsform lässt sich eine modulare Doppelkupplungsanordnung besonders einfach realisieren, da die elektrische Maschine radial außerhalb der Reibkupplungen angeordnet werden kann.

Ferner ist es vorteilhaft, wenn die erste Reibkupplung eine Lamellenkupplung ist und wenn das Ausgangsglied der ersten Reibkupplung ein Außenlamellenträger ist.

Auch hierbei ist es möglich, eine elektrische Maschine in einen Doppelkupplungsgetriebe-Antriebsstrang zu integrieren, ohne gravierende Änderungen am mechanischen Aufbau und/oder der Steuerung.

Erfindungsgemäß sind die erste und die zweite Reibkupplung axial nebeneinander angeordnet.

Hierdurch lässt sich eine radial kompakte Bauform realisieren.

Erfindungsgemäß ist vorgesehen, die erste Reibkupplung eingangsseitig anzuordnen.

Dies ermöglicht insgesamt eine konstruktive Vereinfachung des Gesamtaufbaus.

Die Begriffe eingangsseitig und ausgangsseitig sollen vorliegend so verstanden werden, dass die eine Reibkupplung in axialer Richtung näher am Eingang bzw. Ausgang angeordnet ist, sind also rein räumlich zu verstehen.

Insgesamt ist es ferner bevorzugt, wenn die Reibkupplungen als nass laufende Reibkupplungen ausgebildet sind und wenn radial innerhalb der Reibkupplungen eine gehäusefeste Nabe angeordnet ist, über die den Reibkupplungen Fluid zuführbar ist.

Das Zuführen von Fluid kann dabei sowohl zur Betätigung der Reibkupplungen dienen, als auch zum Kühlen der Reibkupplungen. Es versteht sich, dass zu diesem Zweck bevorzugt getrennte Fluidpfade eingerichtet werden. Diese können über eine solche Nabe konstruktiv besonders günstig eingerichtet werden.

Generell ist die Nabe radial innerhalb der Reibkupplungen angeordnet. Dies bedeutet jedoch nicht notwendigerweise, dass sich die Nabe über die gesamte axiale Länge der Reibkupplungen erstrecken muss. Die Nabe kann sich auch lediglich in eine der zwei Reibkupplungen hinein erstrecken, oder in einen Abschnitt einer Reibkupplung. Die weitere Verteilung von Fluid kann dann über geeignete Gehäuse- bzw. Käfigbauteile der Reibkupplungen erfolgen.

Bei einer vorteilhaften Ausführungsform ist die gehäusefeste Nabe an der Eingangsseite angeordnet und erstreckt sich von der Eingangsseite her in die Reibkupplungen hinein.

Bei dieser Ausführungsform kann eine Drehdurchführung zum Zuführen von Fluid über die Nabe besonders einfach realisiert werden.

Generell ist Folgendes anzumerken: Die elektrische Maschine kann als Motor oder als Generator verwendet werden, je nach Betriebsmodus. Durch die koaxiale Bauweise und die bevorzugte Verwendung von Bauteilen der Reibkupplungen für die Anbindung der elektrischen Maschine ist eine Bauraum sparende Anordnung möglich. Es lässt sich mehr als eine einzelne feste Übersetzung von der elektrischen Maschine zu dem Hauptantrieb bzw. zum Getriebeabtrieb einrichten (in Abhängigkeit von der Anzahl der Gangstufen des zugeordneten Teilgetriebes). Mit der Anbindung der elektrischen Maschine an das Ausgangsglied von einer der zwei Reibkupplungen (im vorliegenden Sprachgebrauch die erste Reibkupplung) sind sämtliche Vorteile der Hybridtechnologie realisierbar, einschließlich Rekuperation, Boost-Betrieb, Motorstart/stopp-Automatik, etc.

Erfindungsgemäß lässt sich die elektrische Maschine auch in ein vorhandenes Doppelkupplungsgetriebesystem integrieren, ohne gravierende Änderungen am mechanischen Aufbau oder der Steuerung. Die Doppelkupplungsanordnung kann konstruktiv auf einfache Weise so realisiert sein, dass eine Einbindung in einen Antriebsstrang mit oder ohne elektrische Maschine möglich ist.

Die Steuerung der Doppelkupplungsanordnung kann hydraulisch, elektrisch oder elektromechanisch ausgeführt werden.

Ferner versteht sich, dass ein mechanischer Antrieb einer Pumpe und weiterer Nebenaggregate möglich ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug mit einer Ausführungsform einer nicht erfindungsgemäßen Doppelkupplungsanordnung;
- Fig. 2: eine Halbschnittansicht durch eine weitere Ausführungsform einer nicht erfindungsgemäßen Doppelkupplungsanordnung;
- Fig. 3: eine Halbschnittansicht einer weiteren Ausführungsform einer nicht erfindungsgemäßen Doppelkupplungsanordnung;
- Fig. 4: eine Halbschnittansicht einer weiteren Ausführungsform einer nicht erfindungsgemäßen Doppelkupplungsanordnung; und
- Fig. 5: eine Halbschnittansicht einer Ausführungsform einer erfindungsgemäßen Doppelkupplungsanordnung.

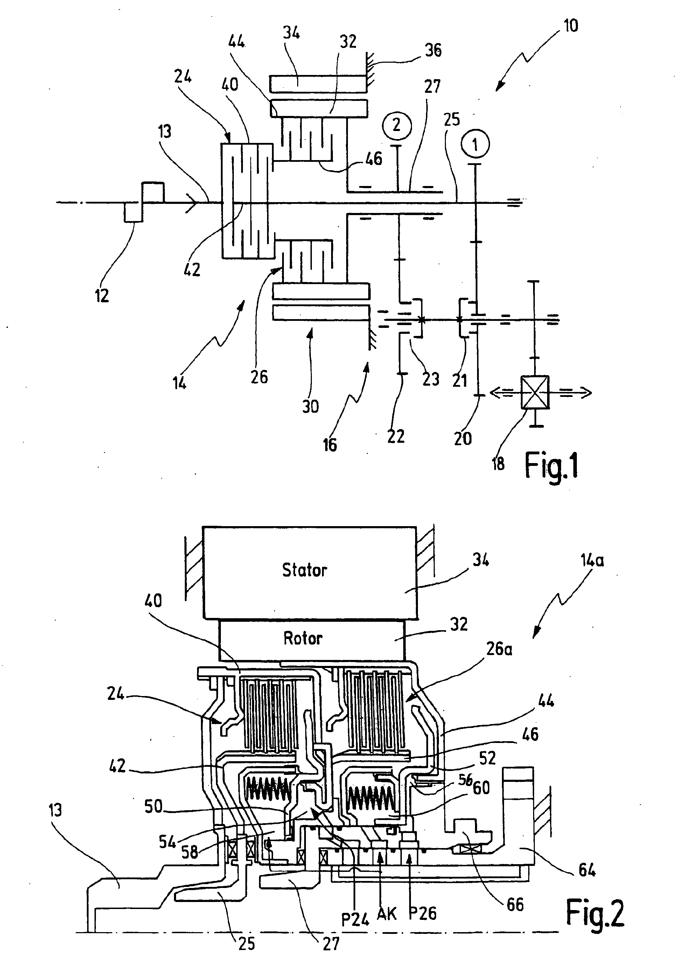

In Fig. 1 ist ein Antriebsstrang für ein Kraftfahrzeug generell mit 10 bezeichnet.

Der Antriebsstrang 10 ist als Doppelkupplungsgetriebe-Antriebsstrang ausgebildet und beinhaltet einen Antriebsmotor 12, in der Regel einen Verbrennungsmotor. Ferner weist der Antriebsstrang 10 eine Doppelkupplungsanordnung 14 auf, deren Eingang mit einer Motorabtriebswelle 13 verbunden ist.

Der Antriebsstrang 10 weist ein Doppelkupplungsgetriebe 16 auf, das zwei parallele Teilgetriebe beinhaltet. Auch beinhaltet der Antriebsstrang 10 ein Differential 18, das mit dem Ausgang des Doppelkupplungsgetriebes 16 verbunden und dazu ausgelegt ist, Antriebsleistung auf zwei angetriebene Räder des Kraftfahrzeugs zu verteilen.

Obgleich unter einem Doppelkupplungsgetriebe im allgemeinen Sprachgebrauch eine Kombination aus zwei parallelen Teilgetrieben und einer Doppelkupplungsanordnung verstanden wird, wird der Begriff Doppelkupplungsgetriebe vorliegend im Sinne eines Getriebes mit zwei Teilgetrieben zur Verbindung mit einer Doppelkupplungsanordnung verwendet.

Das Doppelkupplungsgetriebe 16 beinhaltet eine Mehrzahl von Radsätzen für eine entsprechende Mehrzahl von Gangstufen (z.B. 5, 6 oder mehr Gangstufen). Im vorliegenden Fall sind aus Gründen einer übersichtlichen Darstellung lediglich ein Radsatz 20 für eine erste Gangstufe und ein Radsatz 22 für eine zweite Gangstufe gezeigt. Die Radsätze 20, 22 sind unterschiedlichen Teilgetrieben zugeordnet. Der Radsatz 20 ist mittels einer ersten Schaltkupplung 21 in den Leistungsübertragungspfad schaltbar. Der Radsatz 22 ist mittels einer zweiten Schaltkupplung 23 in den Leistungsübertragungspfad schaltbar bzw. ein- und auslegbar.

Die Darstellung des Doppelkupplungsgetriebes 16 mit einer Vorgelegewelle, die gleichzeitig eine Ausgangswelle bildet, ist lediglich beispielhaft zu verstehen.

Die erfindungsgemäße Doppelkupplungsanordnung ist für jede Art von Doppelkupplungsgetriebe-Antriebsstrang verwendbar, sei es für den Längs- oder Quereinbau, für Front-, Heck- oder Mittelmotorvarianten.

Die Doppelkupplungsanordnung 14 weist eine erste Reibkupplung in Form einer Lamellenkupplung 26 und eine zweite Kupplung in Form einer Lamellenkupplung 24 auf.

Die zweite Kupplung 24 ist eingangsseitig mit der Motorabtriebswelle 13 verbunden. Ausgangsseitig ist die zweite Kupplung 24 mit einer Ausgangswelle (zweite Ausgangswelle) verbunden. Die zweite Ausgangswelle ist mit einer Getriebeeingangswelle 25 (Innenwelle) verbunden, die dem Teilgetriebe mit den ungeraden Gangstufen zugeordnet ist.

Die erste Reibkupplung 26 ist eingangsseitig ebenfalls mit der Motorabtriebswelle 13 verbunden. Ausgangsseitig ist die erste Reibkupplung 26 (über eine erste Ausgangswelle) mit einer weiteren Getriebeeingangswelle 27 verbunden, die koaxial als Hohlwelle um die andere Getriebeeingangswelle 25 herum vorgesehen ist. Die weitere Getriebeeingangswelle 27 ist dem zweiten Teilgetriebe des Doppelkupplungsgetriebes 16 zugeordnet, das die geraden Gangstufen aufweist.

Koaxial zu der Doppelkupplungsanordnung 14 ist eine elektrische Maschine 30 vorgesehen. Ein Rotor 32 der elektrischen Maschine 30 ist mit einem Ausgangsglied der ersten Reibkupplung 26 verbunden. Ein Stator 34 der elektrischen Maschine 30 ist gehäusefest angeordnet (Gehäuse 36).

Im vorliegenden Fall ist die elektrische Maschine 30 radial außerhalb der Doppelkupplungsanordnung 14 angeordnet. Es ist jedoch auch möglich, die elektrische Maschine 30 koaxial zu der als Hohlwelle ausgebildeten Getriebeeingangswelle 27 anzuordnen, derart, dass der Rotor der elektrischen Maschine 30 unmittelbar mit der Hohlwelle 27 verbunden ist.

Die Reibkupplungen 24, 26 sind, wie gesagt, als Lamellenkupplungen ausgebildet. Die zweite Reibkupplung 24 weist als Eingangsglied einen Außenlamellenträger 40 auf. Ein Innenlamellenträger 42 der zweiten Reibkupplung 24 ist mit der einen Getriebeeingangswelle 25 (Innenwelle) verbunden.

Ein Eingangsglied der ersten Reibkupplung 26 ist als Innenlamellenträger 46 ausgebildet. Der Innenlamellenträger 46 kann einerseits direkt mit der Motorabtriebswelle 13 verbunden sein. Der Innenlamellenträger 46 kann jedoch andererseits, wie gezeigt, auch mit dem Außenlamellenträger 40 der zweiten Reibkupplung 24 verbunden sein (mittelbar mit der Motorabtriebswelle 13 verbunden).

Ein Ausgangsglied der ersten Reibkupplung 26 ist als Außenlamellenträger 44 ausgebildet. Der Rotor 32 ist mit dem Außenlamellenträger 44 fest verbunden oder vorzugsweise sogar einstückig mit diesem ausgebildet.

Der Außenlamellenträger 44 ist mit der weiteren Getriebeeingangswelle 27 (Hohlwelle) verbunden.

Da die elektrische Maschine 30 radial außerhalb der Doppelkupplungsanordnung 14 angeordnet ist, lässt sich der Antriebsstrang 10 konstruktiv einfach sowohl mit elektrischer Maschine als auch ohne elektrische Maschine realisieren (modulare Bauweise).

Ferner ist eine Integration in vorhandene Doppelkupplungsgetriebesysteme möglich.

Durch die Anbindung der elektrischen Maschine an eine der Getriebeeingangswellen ist ein optimierter Hybridbetrieb möglich. Es sind unterschiedliche Übersetzungen von der elektrischen Maschine zum Getriebeabtrieb bzw. zum Antriebsmotor realisierbar (über die Gangstufen des Teilgetriebes, das der ersten Reibkupplung 26 zugeordnet ist).

Ein weiterer Vorteil der radial außen liegenden Anordnung besteht darin, dass bei nass laufenden Reibkupplungen 24, 26 die elektrische Maschine 30 in den Kühlkreislauf der Doppelkupplungsanordnung einbezogen werden kann.

Das Kühlfluid wird bei Doppelkupplungsanordnungen generell von radial innen zugeführt und drängt durch die Fliehkraft radial nach außen. Daher kann das so verwendete Kühlfluid auch dazu verwendet werden, die radial außen liegende elektrische Maschine zu kühlen, insbesondere den Stator.

In den folgenden Figuren 2 bis 4 sind unterschiedliche Ausführungsformen der Doppelkupplungsanordnung gezeigt.

Der generelle Aufbau und die generelle Funktionsweise dieser Doppelkupplungsanordnungen entsprechen generell der Doppelkupplungsanordnung 14 bzw. deren Einbindung in den Antriebsstrang 10 der Fig. 1. Im Folgenden wird daher lediglich auf einige konstruktive Details bzw. Modifikationen eingegangen.

In Fig. 2 ist eine Doppelkupplungsanordnung 14a gezeigt, bei der die Reibkupplungen 24, 26a axial hintereinander bzw. nebeneinander angeordnet sind.

Die zweite Reibkupplung 24 ist eingangsseitig und die erste Reibkupplung 26a ist ausgangsseitig angeordnet. Die Aktuatorik zum Betätigen der Reibkupplungen 24, 26a ist radial innen liegend angeordnet.

Ein Kolben der zweiten Reibkupplung 24 ist bei 50 gezeigt. Ein Kolben der ersten Reibkupplung 26a ist bei 52 gezeigt. Ein Druckraum der zweiten Reibkupplung 24 ist bei 54 gezeigt. In den Druckraum 54 ist Hydraulikfluid zum Betätigen der Reibkupplung 24 zuführbar, wie es durch einen Pfeil P24 schematisch angedeutet ist. Ein Druckraum der ersten Reibkupplung 26a ist bei 56 gezeigt. In diesen ist zum Betätigen der ersten Reibkupplung 26a Hydraulikfluid zuführbar, wie es durch einen Pfeil P26 gezeigt ist.

Der zweiten Reibkupplung 24 ist ferner ein Ausgleichsraum 58 zugeordnet, in den Hydraulikfluid einführbar ist, um die auf den Kolben 50 wirkenden Kräfte kompensieren zu können, die aufgrund der auf das Hydraulikfluid in dem Druckraum 54 wirkenden Fliehkraft entstehen. Ein entsprechender Ausgleichsraum für die erste Reibkupplung 26a ist bei 60 gezeigt.

In den Ausgleichsräumen 58, 60 sind ferner nicht näher bezeichnete Federn zum Rückstellen der Kolben 50, 52 angeordnet.

Radial innerhalb der Reibkupplungen 24, 26a ist eine gehäusefeste Nabe 64 angeordnet. Die gehäusefeste Nabe 64 erstreckt sich ausgehend von der Ausgangsseite der Doppelkupplungsanordnung 14a axial in die Doppelkupplungsanordnung 14a hinein. Über die Nabe 64 kann Hydraulikfluid über verschiedene Kanäle zugeführt werden, zum Zuführen von Hydraulikfluid P24 zu dem Druckraum 54, von Hydraulikfluid P26 zu dem Druckraum 56, und zum Zuführen von Ausgleichs- und Kühlfluid AK zu den Ausgleichsräumen 58, 60.

Die Ausgleichsräume 58, 60 sind über (nicht dargestellte) Öffnungen in den Kupplungsbauteilen dazu ausgelegt, die Reibkupplungen 24, 26a mit Kühlfluid zu versorgen. Das Kühlfluid kann dann ferner radial nach außen geführt werden, und zwar hin zu der elektrischen Maschine 30 (dem Stator 34).

Die Nabe 64 bildet hierbei einen Teil einer Drehdurchführung. Der rotierende Teil der Drehdurchführung ist durch ein Wellenteil 66 gebildet. Dieses ist zum einen mit dem Außenlamellenträger 44 der ersten Reibkupplung 26a verbunden. Zum anderen ist das Wellenteil 66 mit der weiteren Getriebeeingangswelle 27 verbindbar, wie es in Fig. 2 schematisch angedeutet ist.

Das Wellenteil 66 bildet ferner hin zu dem Druckraum 54 eine weitere Drehdurchführung. Hierdurch ist es möglich, die Fluidzufuhr zu der Doppelkupplungsanordnung 14a von der Ausgangsseite her zu realisieren. Daher ist eine Anbindung an die Motorabtriebswelle 13 auf konstruktiv einfache Weise möglich.

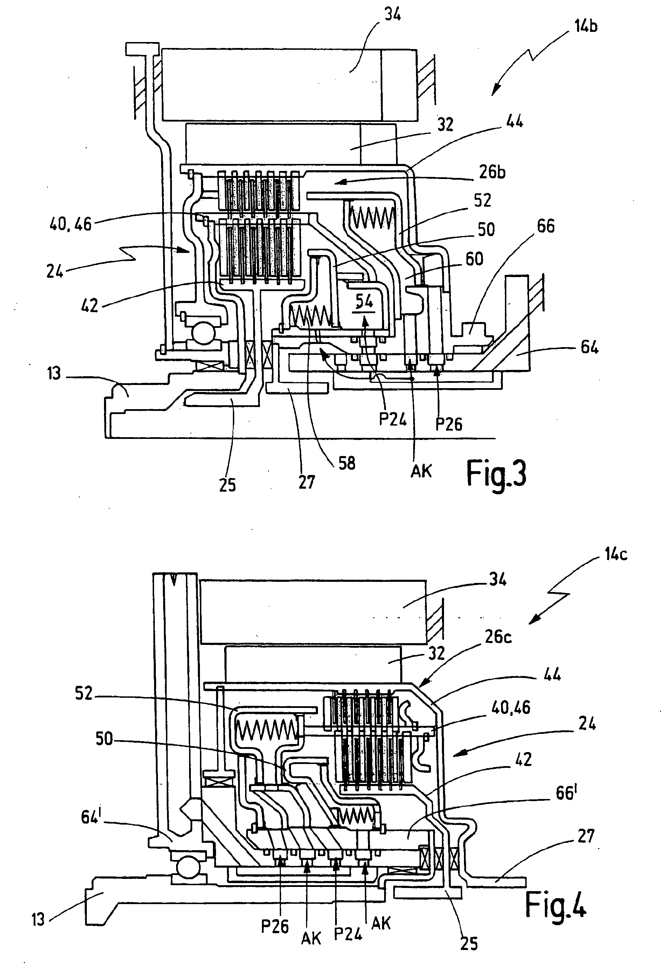

In Fig. 3 ist eine weitere alternative Ausführungsform einer Doppelkupplungsanordnung 14b gezeigt. Diese entspricht hinsichtlich Aufbau und Funktionsweise generell der Doppelkupplungsanordnung 14a der Fig. 2. Im Folgenden wird lediglich auf Unterschiede eingegangen.

Die Doppelkupplungsanordnung 14b weist eine erste Reibkupplung 26b und eine zweite Reibkupplung 24 auf, die radial ineinander verschachtelt angeordnet sind. Die erste Reibkupplung 26b ist radial außen angeordnet.

Ein Lamellenträger 40, 46 dient gleichzeitig als Innenlamellenträger 46 für die erste Reibkupplung 26b und als Außenlamellenträger 40 für die zweite Reibkupplung 24.

Wiederum ist eine zweite Drehdurchführung hin zu dem Druckraum 54 für die zweite Reibkupplung 24 vorgesehen, und zwar über das Wellenteil 66.

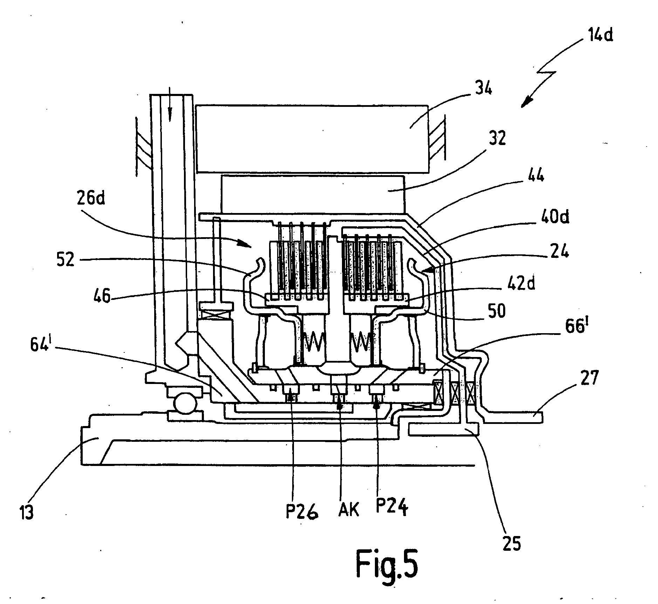

In den Fig. 4 und 5 sind zwei weitere Ausführungsformen von Doppelkupplungsanordnungen 14c, 14d gezeigt.

In beiden Fällen ist eine Nabe 64' vorgesehen, die sich von der Eingangsseite der Doppelkupplungsanordnung her axial nach innen erstreckt.

Bei diesen Ausführungsformen ist die Anbindung auf der Eingangsseite der Doppelkupplungsanordnung 14c, 14d etwas aufwändiger. Dafür lässt sich die Fluidversorgung in der Regel mit einer einfachen Drehdurchführung realisieren.

Die in Fig. 4 gezeigte Doppelkupplungsanordnung 14c weist zwei radial ineinander verschachtelte Reibkupplungen auf, wobei die erste Reibkupplung 26c radial außen angeordnet ist.

Bei der erfindungsgemäßen Doppelkupplungsanordnung 14d der Fig. 5 sind die Reibkupplungen axial benachbart zueinander angeordnet, wobei die erste Reibkupplung 26d eingangsseitig angeordnet ist.

Während bei den Doppelkupplungsanordnungen 14a, 14b das Wellenteil 66 jeweils der Ausgangsseite zugeordnet ist, insbesondere mit der weiteren Getriebeeingangswelle 27 verbunden ist, ist bei den Doppelkupplungsanordnungen 14c, 14d das Wellenteil 66' dem Eingang zugeordnet. Mit anderen Worten ist es möglich, dass sich die Eingangsglieder der Reibkupplungen 24, 26c bzw. 26d mit dem Wellenteil 66' mitdrehen, so dass nur eine einfache Drehdurchführung von der Nabe 64' zu dem Wellenteil 66' erforderlich ist.

## Patentansprüche

1. Doppelkupplungsanordnung (14d) mit einer Eingangswelle (13), mit einer ersten Reibkupplung (26d), deren Eingangsglied (46) mit der Eingangswelle (13) und deren Ausgangsglied (44) mit einer ersten Ausgangswelle (27) verbunden ist, mit einer zweiten Reibkupplung (24), deren Eingangsglied ( 42d) mit der Eingangswelle (13) und deren Ausgangsglied (40d) mit einer zweiten Ausgangswelle (25) verbunden ist, wobei die erste und die zweite Reibkupplung axial nebeneinander angeordnet sind, wobei die Ausgangswellen (25, 27) mit entsprechenden Eingangswellen eines Doppelkupplungsgetriebes verbindbar sind, und mit einer elektrischen Maschine, die mit der ersten Ausgangswelle (27) verbunden ist, wobei die elektrische Maschine koaxial zu der ersten Reibkupplung (26d) angeordnet ist und wobei ein Rotor (32) der elektrischen Maschine fest mit dem Ausgangsglied (44) der ersten Reibkupplung (26d) verbunden ist, **dadurch gekennzeichnet, dass** die erste Reibkupplung (26d) in axialer Richtung näher an einem Eingang der Doppelkupplungsanordnung (14d) angeordnet ist als die zweite Reibkupplung (24), wobei der Eingang durch die Eingangswelle (13) festgelegt ist.

2. Doppelkupplungsanordnung nach Anspruch 1, **dadurch gekennzeichnet, dass** der Rotor (32) und das Ausgangsglied (44) der ersten Reibkupplung (26d) einstückig ausgebildet sind.

3. Doppelkupplungsanordnung nach Anspruch 1 oder 2, **dadurch gekennzeichnet, dass** der Rotor (32) radial außen an dem Ausgangsglied (44) der ersten Reibkupplung (26d) festgelegt ist.

4. Doppelkupplungsanordnung nach einem der Ansprüche 1 bis 3, **dadurch gekennzeichnet, dass** die erste Reibkupplung (26d) eine Lamellenkupplung ist und dass das Ausgangsglied (44) der ersten Reibkupplung (26d) ein Außenlamellenträger (44) ist.

5. Doppelkupplungsanordnung nach einem der Ansprüche 1 bis 4, **dadurch gekennzeichnet, dass** die Reibkupplungen als nasslaufende Reibkupplungen ausgebildet sind und dass radial innerhalb der Reibkupplungen eine gehäusefeste Nabe (64') angeordnet ist, über die den Reibkupplungen Fluid zuführbar ist.

6. Doppelkupplungsanordnung nach Anspruch 5, **dadurch gekennzeichnet, dass** die gehäusefeste Nabe (64') sich von der Eingangsseite her radial in die Reibkupplungen hinein erstreckt.

## Claims

1. Dual clutch arrangement (14) with an input shaft (13), with a first friction clutch (26d), the input element (46) of which is connected to the input shaft (13) and the output element (44) of which is connected to a first output shaft (27), with a second friction clutch (24), the input element (42d) of which is connected to the input shaft (13) and the output element (40d) of which is connected to a second output shaft (25), wherein the first friction clutch and the second friction clutch are arranged axial next to one another, the output shafts (25, 27) being connectable to corresponding input shafts of a dual clutch transmission (16), and with an electric machine (30) which is connected to the first output shaft (27), wherein the electric machine (30) is arranged coaxially with the first friction clutch (26d), and wherein a rotor (32) of the electric machine is firmly connected to the output element (44) of the first friction clutch (26d), **characterized in that** the first friction clutch (26d) is arranged closer in an axial direction to the input of the dual clutch arrangement than the second friction clutch (24), wherein the input is determined by the input shaft (13).

2. Dual clutch arrangement according to claim 1, **characterized in that** the rotor (32) and the output element (44) of the first friction clutch (26d) are integrally formed.

3. Dual clutch arrangement according to claim 1 or 2, **characterized in that** the rotor (32) is fixed radially outside to the output element (44) of the first friction clutch (26d).

4. Dual clutch arrangement according to any one of claims 1 to 3, **characterized in that** the first friction clutch (26d) is a multi-plate clutch and that the output element (44) of the first friction clutch (26d) is an outer plate carrier (44).

5. Dual clutch arrangement according to any one of claims 1 to 4, **characterized in that** the friction clutches are embodied as wet friction clutches and that a hub (64'), which is fixed to the housing and via which fluid can be fed to the friction clutches, is arranged radially inside the friction clutches.

6. Dual clutch arrangement according to claim 5, **characterized in that** the hub (64') fixed to the housing extends radially from the input side into the friction clutches.

## Revendications

1. Agencement à double embrayage (14d) avec un arbre d'entrée (13), avec un premier embrayage à friction (26d) dont l'élément d'entrée (46) est relié à l'arbre d'entrée (13) et dont l'élément de sortie (44) est relié à un premier arbre de sortie (27), ainsi qu'avec un deuxième embrayage à friction (24) dont l'élément d'entrée (42d) est relié à l'arbre d'entrée (13) et dont l'élément de sortie (40d) est relié à un deuxième arbre de sortie (25), le premier et le deuxième embrayage à friction étant disposés côte à côte dans le plan axial, les arbres de sortie (25, 27) pouvant être reliés aux arbres d'entrée correspondants d'une boîte de vitesses à double embrayage et à un moteur électrique relié au premier arbre de sortie (27), le moteur électrique étant disposé dans le plan coaxial par rapport au premier embrayage à friction (26d) et un rotor (32) du moteur électrique étant relié fixement à l'élément de sortie (44) du' premier embrayage à friction (26d), **caractérisé en ce que** le premier embrayage à friction (26d) est disposé, dans la direction axiale, plus près de l'entrée de l'agencement à double embrayage (14d) que le deuxième embrayage à friction (24), l'entrée étant déterminée par la présence de l'arbre d'entrée (13).

2. Agencement à double embrayage selon la revendication 1, **caractérisé en ce que** le rotor (32) et l'élément de sortie (44) du premier embrayage à friction (26d) sont réalisés d'un seul tenant.

3. Agencement à double embrayage selon la revendication 1 ou 2, **caractérisé en ce que** le rotor (32) est placé à l'extérieur dans le plan radial au niveau de l'élément de sortie (44) du premier embrayage à friction (26d).

4. Agencement à double embrayage selon l'une quelconque des revendications 1 à 3, **caractérisé en ce que** le premier embrayage à friction (26d) est un embrayage à lamelles et que l'élément de sortie (44) du premier embrayage à friction (26d) est un support de lamelles extérieures (44).

5. Agencement à double embrayage selon l'une quelconque des revendications 1 à 4, **caractérisé en ce que** les embrayages à friction prennent la forme d'embrayages à friction de type mouillé et qu'un moyeu (64') fixé au carter est disposé dans le plan radial à l'intérieur des embrayages à friction, ledit moyeu servant à alimenter en fluide les embrayages à friction.

6. Agencement à double embrayage selon la revendication 5, **caractérisé en ce que** le moyeu (64') fixé au carter s'étend du côté d'entrée dans le plan radial jusque dans les embrayages à friction.
